# EUROPEAN PATENT SPECIFICATION

(11) **EP 2 109 388 B1**
(45) Date of publication and mention of the grant of the patent: **28.11.2012**
(21) Application number: 08714591.8
(22) Date of filing: 11.02.2008
(51) Int. Cl.: A47J 43/25

(54) **RASP AND COVER**
RASPEL UND ABDECKUNG
RÂPE ET COUVERCLE

(30) Priority: 09.02.2007 US 900333 P
(43) Date of publication of application: 21.10.2009
(73) Proprietor: Browne & Co., Markham, Ontario L3R 1E3 (CA)
(72) Inventor: CHAN, David, Scarborough, Ontario M1W 3W2 (CA)
(74) Representative: Burt, Matthew Thomas
(86) International application number: PCT/CA2008/000268
(87) International publication number: WO 2008/095316

(56) References cited:
- GB-A- 191 307 856
- US-A1- 2003 038 195
- US-A1- 2004 217 219
- US-S1- D 440 129

## Description

### Field

The present invention is directed to a rasp having a cover. The cover is operable to be attached on two sides of the rasp, namely on one side to cover the grating surface and on the opposite side (e.g. under the grating surface) to receive and collect material that is grated. The present invention will be described with reference to a rasp, however, it will be understood that the rasp may also be referred to as a grater.

### Background

Rasps are useful to reduce material to smaller sized particles. In cooking, they are often used to reduce vegetables, cheese, fruit peel (zest), chocolate and nuts, among other food items, to varying sized shavings or particles by grating. The sharp grating elements can cut a user's skin or scratch other utensils. Rasp covers are often used to provide a protective barrier over the grating elements when the rasp is not in use (e.g. in a drawer). However, collecting the fine particles produced by the rasp can be a chore. In cooking, these particles often require measuring to complete a particular recipe. The grated particles thus have to be collected and placed in a measuring tool such as a spoon.

A rasp and cover that addresses one or more of these issues is desired.
US 2003/0038195 A1 (Coburn et al) discloses a carrier for a rasp that serves to support the rasp when it is in use and store the rasp when it is not being used. The rasp carrier includes a bottom, two side walls, a back wall, and a tab positioned on the back wall. To support the rasp, the rasp is positioned atop the carrier. The side edges of the rasp fit over the side walls of the carrier to prevent lateral movement of the rasp relative to the carrier. A mounting hole on the rasp engages the tab on the rasp carrier to prevent linear movement of the rasp along the carrier. To store the rasp, the rasp is removed from the top of the carrier and slid between the side walls of the carrier.

### Summary

In brief, the rasp cover releasably covers either side of the rasp to protect a user from the grating elements when the rasp is not in use and to catch grated material when in use. The rasp has a head portion, grating surface portion with grating elements and a handle portion. The cover is sized and shaped to frictionally fit between ends of the head portion and handle portion when put in place on either side of the rasp. The cover is preferably transparent and includes measuring indicia.

### Brief Description of the Drawings

Figure 1 is a front view of an assembled rasp and cover in accordance with an embodiment of the invention and in which the cover is in a top position covering the grating elements;

Figure 2 is an isometric view of the rasp and cover of Figure 1;

Figure 3 is an isometric view of the rasp and cover of Figure 1 in which the cover is removed and turned over for mounting to the rasp under the grating elements;

Figures 4 and 5 are respective top and bottom isometric views of the cover of Figs 1-3;

Figure 6 is a representation of the rasp in use while grating without the cover;

Figure 7 is a representation of the rasp in use while grating with the cover positioned to catch the grated particles; and

Figure 8 is a representation of grated particles in the cover.

### Detailed Description

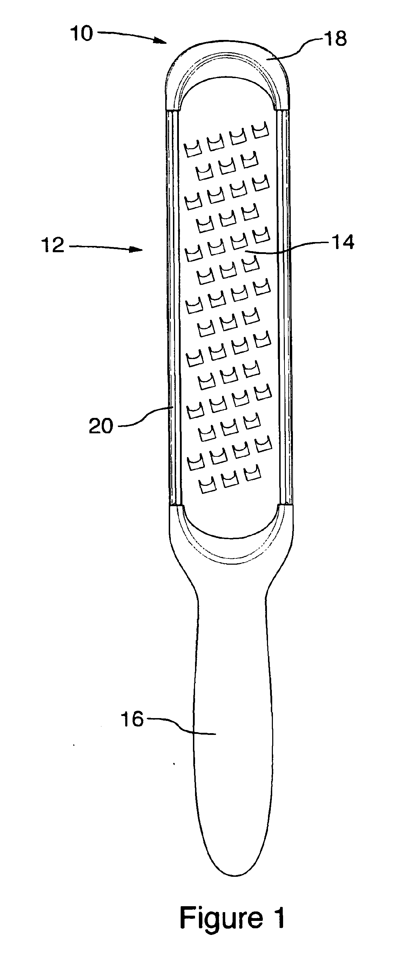

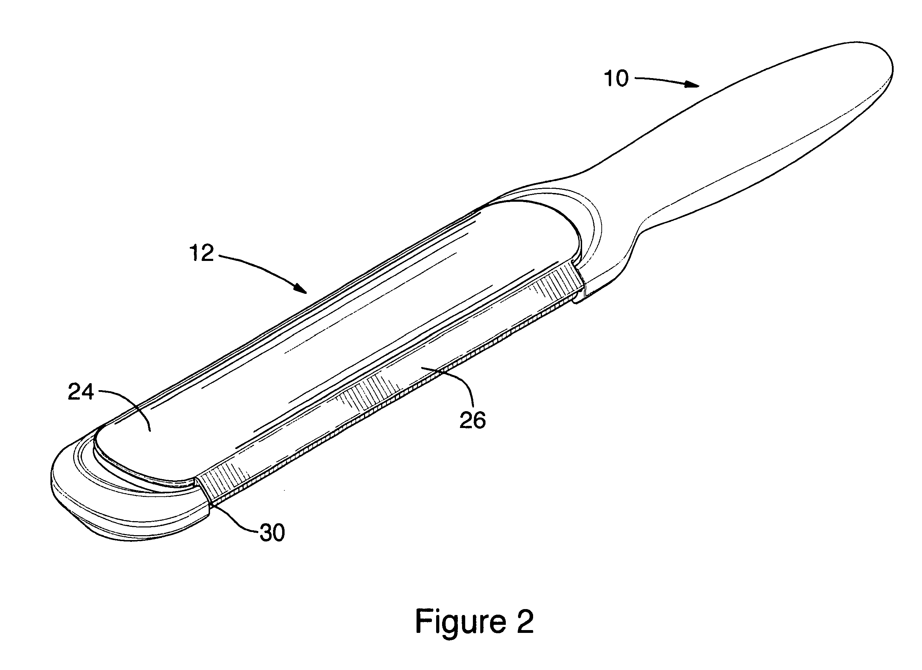

Figure 1 shows the rasp 10 having the cover 12 placed on top of the rasp 10 on the surface of the rasp that includes a plurality of grating elements 14. Figure 2 also shows the cover 12 attached on the rasp 10.

As can be seen in Figures 1 and 2, the rasp includes a handle portion 16 and a head portion 18 and a surface portion 20 located between the two. The surface portion 20 includes a plurality of grating elements 14. The grating elements 14 may be unitary in shape or may comprise different shapes. Further the surface portion 20 may include a series of rows of grating elements 14 of the same size, as seen in Figure 1. It will also be understood that the rasp 10 is not limited to only include one size of grating element 14 and may be formed from different surface portions 20 having different grating element sizes, i.e. the rasp may have a surface having small grating elements or the rasp may have a surface portion including large grating elements. It will be understood that the present invention is not limited to the size and/or shape of the grating elements. For clarity the grating elements are omitted from Figure 2.

The handle portion 16 is preferably ergonomically shaped to conform to a user's hand for easy holding and use. Preferably the handle portion 16 is formed from a material that is easy to grip and conforms to the requirements of a kitchen utensil, i.e. can withstand temperatures for cleaning and is a food grade material.

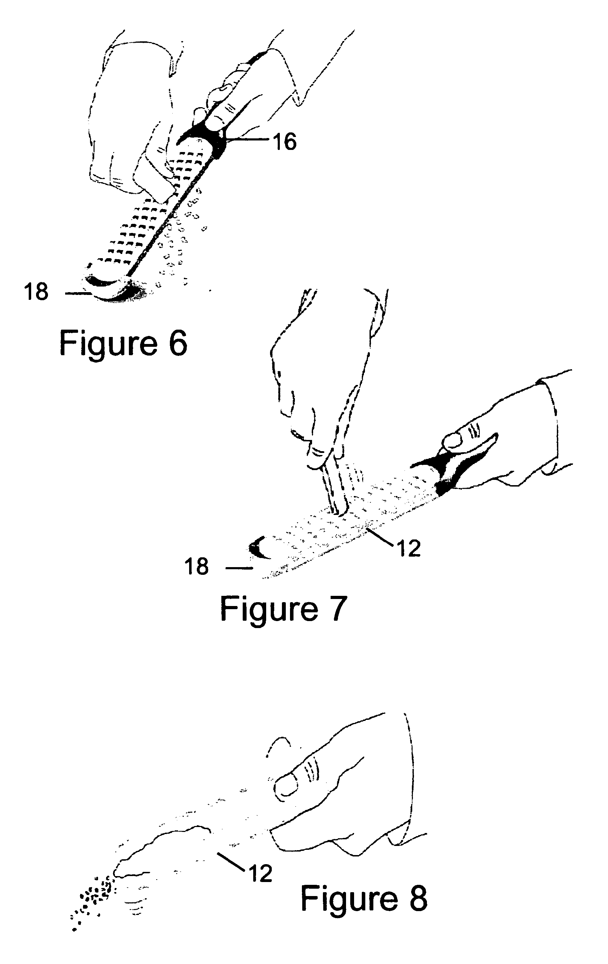

The head portion 18 is preferably formed from a non-slip material, or alternatively is covered with a non-slip material, that allows a user to angle the rasp by placing the head portion 18 against a surface, as seen in Figure 6, to allow for use of the rasp at varying angles without the rasp slipping during use.

Located between the head portion 18 and the handle portion 16 is a surface portion 20 that includes a plurality of grating elements 14. The surface portion is preferably made from metal and the grating elements are formed within the metal, as per known grating elements. From the exterior sides of the surface portion 20, not adjacent the handle portion or the head portion, depend two walls 22 that create a U-shaped channel with the surface portion 20 on the underside of the surface portion. When in use material is grated upon surface portion 20 and passes through the grating elements 14 and falls into the channel defined between the walls 22.

The cover 12 is shown clearly in Figures 2-5. The cover 12 is shaped to be received on the rasp 10 and to cover the surface portion 20. The cover 12 is preferably made from a clear (transparent) material that is a food grade material, in one embodiment the cover 12 is a clear plastic material.

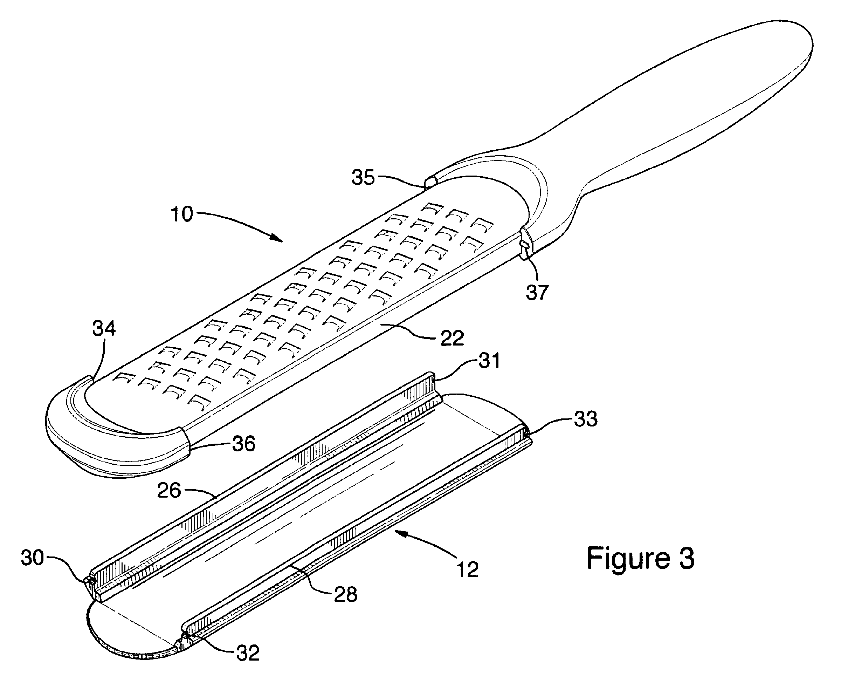

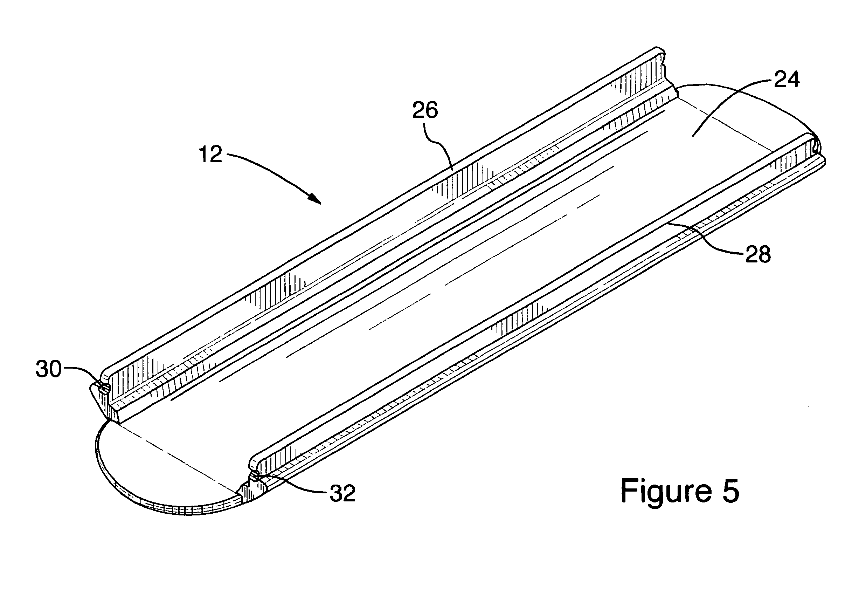

The cover 12 includes a body portion 24 that is sized and shaped to be releasably received on, and cover, the surface portion 20 of the rasp 10. The body portion 24 includes first and second leg portions 26,28 that extend away from and substantially perpendicular to the body portion 24 along the elongated sides thereof, as seen in Figures 3 and 5. The first and second leg portions include respective first and second ends 30,32 which are located at the end of the cover that lies adjacent the head portion 18 and respective first and second opposite ends 31 and 33 which are located at the end of the cover that lies adjacent the handle portion 16 when the cover is received on the rasp. It will be understood that the opposite ends 31 33 of the leg portions are the same and can operate in the same manner as ends 30,32, which will be described below, if the cover portion is flipped around, i.e. with the bottom end adjacent the head portion 18.

The first and second leg portions 26, 28 are sized and configured to be operable to position the cover 12 on the surface portion 20 of the rasp and to fit around the walls 22 (Figure 3) of the surface portion 20 when the cover 12 is in place over the surface portion 20 of the rasp 10. The size and shape of the body portion 24 of the cover 12 is substantially equal to the size and shape of the surface portion 20 of the rasp 10.

As stated above the head portion 18 is made from a non-slip material, preferably a flexible rubber material. When the cover is positioned on the surface portion 20 and the leg portions 26, 28 lie adjacent to the outside of the walls 22, the first and second ends 30, 32 lie against the outside edges 36, 34 of the head portion 18 and the first and second opposite ends 31, 33 lie against the outside edges 35, 37 of the handle portion 16. The first and second ends 30, 32 are shaped so as to frictionally engage with the outside edges 36, 34 of the head portion 18 (while opposite ends 31, 33 abut edges 35, 37 of the handle portion 16) and when in place cause the outside edges 36, 34 to receive the first and second ends 30, 32 in frictional engagement. The fit creates a secure engagement of the two portions and maintains the cover on the surface portion 20. As will be understood the engagement of the first and second ends 30, 32 may cause a slight deformation in the outside edges 36, 34 of the head portion 18, when formed of a pliant material like rubber, to provide the engagement of the two portions or may simply be a close frictional fit.

As stated above, the cover 12 is operable to be used as both a cover and also in a configuration to collected grated material (See Figures 3 and 7). In the second configuration the cover 12 is removed from the surface portion 20 and flipped over to be positioned and received on the underside of the rasp. The cover 12 is received on the underside of the surface at the end of the walls 22. The cover 12 is held in position with the first and second leg portions 26, 28 fitting around the outside of the walls 22 of the surface portion 20 and the first and second ends 30, 32 engaging with the outside edges 36, 34 of the head portion 20 and opposite ends 31, 33 engaging or abutting edges 35, 37 of the handle portion, thereby releasably securing the cover 12 in place.

It will be apparent to a person of ordinary skill in the art that the placement of the cover 12 at the edge of the walls 22 creates an enclosed container area or pocket defined by the underside of the surface portion 20, the walls 22 the inside edges of the handle portion 16 and the head portion 18, and the body portion 24 of the cover 12. This container area or pocket allows for material that is grated to be collected within it. For example, Figure 6 shows an embodiment when the cover 12 is not received on the rasp 10 and Figure 7 shows a configuration in which the cover 12 is received on the underside of surface portion 20 and where material is collected within the container area or pocket as opposed to falling out of the rasp, as seen in Figure 6.

As illustrated in Figure 8, once a sufficient amount of grated material has been collected, the cover 12 may be removed and the material poured from the cover 12.

It will be understood that the cover 12 is held in each of the first and second configurations by the secure fit of the first and second ends 30, 32 with the outside edges 36, 34 of the head portion 18 and opposite ends 31, 33 with the edges 35, 37 of the handle portion, as described above.

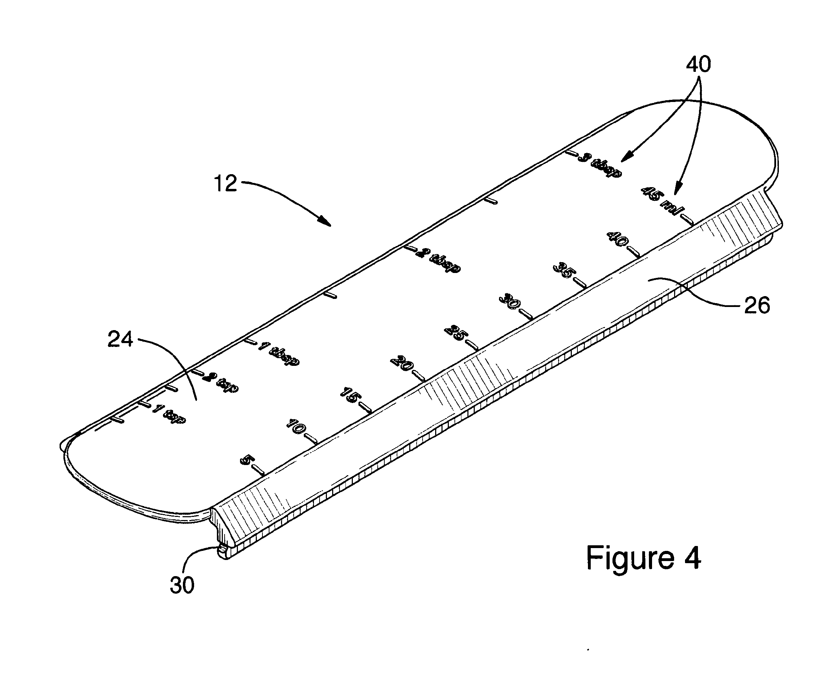

In one embodiment the cover 12 includes indicia (e.g. 40 in Figure 4) that show the amount of material that has been grated. It will be understood that the rasp and cover will be formed in such a manner that the area of the enclosed container area or pocket will be measured and the indicia or measurements placed on the cover portion to correctly reflect the amount of material that has been collected within the area, i.e. to identify for a user how much material has been grated. For example, the indicia/measurements show volumetric measures and may include teaspoon, tablespoon and ml measurements.

As discussed above, the cover 12 of the present invention is operable to be used in at least two configurations. A first configuration provides a cover for the surface portion 20 of the rasp 12 that includes the grating elements 14. In this configuration the cover 12 protects a user from cutting themselves on the grating elements 14 while the rasp 10 is not in use. In a second configuration the cover 12 acts as a collection device and is located on the underside of the rasp 10 and is operable to contain any grated material between the rasp surface portion 20, walls 22 and the cover 12. Once the material has been grated the cover 12 may be removed from the underside of the rasp 10 and the material may be poured out or removed for use.

## Claims

1. A rasp (10) comprising:
a grating surface (20) having a plurality of grating elements (14) thereon; and
a cover (12) operable to releasably fit over the grating surface (20) to cover the grating elements (14) and operable to be releasably fit under the grating surface (20) to receive grated material, **characterised in that** the cover (12) is operable to frictionally fit over or under the grating surface (20) for causing a secure engagement therewith.

2. The rasp (10) according to claim 1, wherein the grating surface (20) further comprises at least two walls (22) depending therefrom at opposing sides of the surface (20).

3. The rasp (10) according to claim 2, wherein the cover (12) is operable to be releasably and frictionally received about the walls (22) to define an enclosed space therebetween.

4. The rasp (10) according to claim 1, wherein the cover (12) is formed from a clear material.

5. The rasp (10) according to claim 1, wherein the cover (12) includes indicia representing measurements (40).

6. The rasp (10) according to claim 1, further comprising a handle portion (16) releasably connected to the grating surface (20).

7. The rasp (10) according to claim 6, further comprising a header portion releasably connected to the grating surface (20) at the opposing end to the handle portion (16).

8. The rasp (10) according to claim 7, wherein the cover (12) is operable to frictionally fit between ends of the head portion and handle portion (16) when placed over or under the grating surface (20).

9. A method of collecting grated material using a rasp (10) having a cover (12) comprising the steps of:
removing the releasably and frictionally fitted cover from the grating surface (20);
releasably and frictionally fitting the cover (12) on the underside of the grating surface (20),
the frictionally fit of the cover (12) with the grating surface (20) causing a secure engagement therewith;
grating the material to be grated; and
removing the cover (12) and the grated material from the underside of the grating surface (20).

## Patentansprüche

1. Raspel (10), die umfasst:
eine Reibeoberfläche (20), auf der mehrere Reibeelemente (14) vorhanden sind; und
eine Abdeckung (12), die betätigbar ist, um über der Reibeoberfläche (20) lösbar angebracht zu werden, um die Reibeelemente (14) abzudecken, und betätigbar ist, um unter der Reibeoberfläche (20) lösbar angebracht zu werden, um abgeriebenes Material aufzunehmen, **dadurch gekennzeichnet, dass** die Abdeckung (12) betätigbar ist, um über oder unter der Reibeoberfläche (20) reibschlüssig angebracht zu werden, um einen sicheren Eingriff damit hervorzurufen.

2. Raspel (10) nach Anspruch 1, wobei die Reibeoberfläche (20) ferner zwei Wände (22) umfasst, die auf gegenüberliegenden Seiten der Oberfläche (20) hiervon herabhängen.

3. Raspel (10) nach Anspruch 2, wobei die Abdeckung (12) betätigbar ist, um um die Wände (22) lösbar und reibschlüssig aufgenommen zu werden, um dazwischen einen geschlossenen Raum zu definieren.

4. Raspel (10) nach Anspruch 1, wobei die Abdeckung (12) aus einem klaren Material gebildet ist.

5. Raspel (10) nach Anspruch 1, wobei die Abdeckung (12) Markierungen aufweist, die Ablesewerte (40) darstellen.

6. Raspel (10) nach Anspruch 1, die ferner einen Griffabschnitt (16) aufweist, der mit der Reibeoberfläche (20) lösbar verbunden ist.

7. Raspel (10) nach Anspruch 6, die ferner einen Kopfabschnitt aufweist, der mit der Reibeoberfläche (20) an dem dem Griffabschnitt (16) gegenüberliegenden Ende lösbar verbunden ist.

8. Raspel (10) nach Anspruch 7, wobei die Abdeckung (12) betätigbar ist, um zwischen Enden des Kopfabschnitts und des Griffabschnitts (16) reibschlüssig angebracht zu werden, wenn sie über oder unter der Reibeoberfläche (20) angeordnet ist.

9. Verfahren zum Sammeln von abgeriebenem Material bei Verwendung einer Raspel (10), die eine Abdeckung (12) besitzt, das die folgenden Schritte umfasst:
Abnehmen der lösbar und reibschlüssig angebrachten Abdeckung von der Reibeoberfläche (20);
lösbares und reibschlüssiges Anbringen der Abdeckung (12) an der Unterseite der Reibeoberfläche (20),
wobei das reibschlüssige Anbringen der Abdeckung (12) an der Reibeoberfläche (20) einen sicheren Eingriff mit dieser hervorruft;
Abreiben des abzureibenden Materials; und
Abnehmen der Abdeckung (12) und des abgeriebenen Materials von der Unterseite der Reibeoberfläche (20).

## Revendications

1. Râpe (10) comprenant :
une surface râpeuse (20) ayant une pluralilé d'éléments râpeurs (14) sur cette dernière; et
un couvercle (12) pouvant fonctionner pour être monté de manière amovible sur la surface râpeuse (20) afin de recouvrir les éléments râpeurs (14) et pouvant fonctionner pour être monté de manière amovible sous la surface râpeuse (20) afin de recevoir le produit râpée, **caractérisée en ce que** le couvercle (12) peut être actionné pour être monté par frottement sur ou sous la surface râpeuse (20) afin de provoquer une mise en prise sûre avec cette derrière.

2. Râpe (10) selon la revendication 1, dans laquelle la surface râpeuse (20) comprend en outre au moins deux parois (22) dépendant de cette dernière au niveau des côtés opposés de la surface (20).

3. Râpe (10) selon la revendication 2, dans laquelle le couvercle (12) peut être actionne pour être reçu de manière amovible et par frottement autour des parois (22) afin de définir un espace clos entre elles.

4. Râpe (10) selon la revendication 1, dans laquelle le couvercle (12) est formé à partir d'un matériau transparent.

5. Râpe (10) selon la revendication 1, dans laquelle le couvercle (12) comprend des repères représentant des mesures (40).

6. Râpe (10) selon la revendication 1, comprenant en outre une partie de poignée (16) raccordée de manière amovible à la surface râpeuse (20).

7. Râpe (10) selon la revendication 6, comprenant en outre une partie de tête raccordée de manière amovible à la surface râpeuse (20) au niveau de l'extrémité opposée de la partie de poignée (16).

8. Râpe (10) selon la revendication 7, dans laquelle le couvercle (12) peut être actionné pour être monté par frottement entre les extrémités de la partie tête et de la partie de poignée (16) lorsqu'il est placé sur ou sous la surface râpeuse (20).

9. Procédé pour collecter un produit râpé en utilisant une râpe (10) ayant un couvercle (12), comprenant les étapes consistant à :
retirer le couvercle monté de manière amovible et par frottement de la surface râpeuse (20) ;
monter de manière amovible et par frottement le couvercle (12) sur la face inférieure de la surface râpeuse (20), le montage par frottement du couvercle (12) avec la surface râpeuse (20) provoquant une mise en prise sûre avec cette dernière ;
râper le produit à râper ; et
retirer le couvercle (12) et le produit râpé de la face inférieure de la surface râpeuse (20).
